# EUROPÄISCHE PATENTSCHRIFT

(11) **EP 1 636 056 B1**
(45) Veröffentlichungstag und Bekanntmachung des Hinweises auf die Patenterteilung: **10.09.2008**
(21) Anmeldenummer: 04762978.7
(22) Anmeldetag: 19.05.2004
(51) Int. Cl.: B60H 1/00, B60H 1/32, F28F 27/02, F28D 1/04

(54) **BAUANORDNUNG FÜR EINE KLIMAANLAGE**
ASSEMBLY ARRANGEMENT FOR AN AIR CONDITIONING UNIT
CONFIGURATION D'UNE INSTALLATION DE CLIMATISATION

(30) Priorität: 13.06.2003 DE 10327120
(43) Veröffentlichungstag der Anmeldung: 22.03.2006
(73) Patentinhaber: Behr GmbH & Co. KG, 70469 Stuttgart (DE)
(72) Erfinder: KOUKOURAVAS, Evripidis, 72654 Neckartenzlingen (DE); SCHWEIZER, Gebhard, 71229 Leonberg (DE)
(74) Vertreter: Grauel, Andreas
(86) Internationale Anmeldenummer: PCT/EP2004/005418
(87) Internationale Veröffentlichungsnummer: WO 2004/110797

(56) Entgegenhaltungen:
- DE-A- 3 511 952
- DE-A- 10 037 384
- DE-A- 10 109 240
- DE-A- 10 147 114
- DE-C- 4 220 823
- FR-A- 2 798 095

## Beschreibung

Die vorliegende Erfindung betrifft eine Bauanordnung für eine Klimaanlage, insbesondere für ein Kraftfahrzeug.

Klimaanlagen sind im Stand der Technik seit langem bekannt und finden in unterschiedlichen Kraftfahrzeugen als Standardausstattung oder Sonderzubehör Anwendung. Derartige Klimaanlagen weisen dabei im Stand der Technik wenigstens zwei Vorrichtungen zum Austausch von Wärme auf, wobei eine zum Abkühlen der Luft und eine zum Erwärmen der Luft dient. Daneben können, je nach dem Einsatzort, unterschiedliche weitere Einrichtungen hinzutreten. So werden beispielsweise in Abhängigkeit vom betreffenden Fahrzeugtyp mehr oder weniger unterschiedliche Zonen des Kraftfahrzeuges klimatisiert. Teilweise werden ein, zwei, zweieinhalb, drei oder vier Zonen des Kraftfahrzeuges klimatisiert. Dabei entsteht das Problem, dass in Abhängigkeit von den Fahrzeugen, in welchen die Klimaanlage Anwendung findet, jeweils unterschiedliche Klimaanlagen zur Verfügung zu stellen sind, was den baulichen Aufwand erhöht und damit zu erhöhten Kosten führt.

Aus der DE 100 37 384 A1 ist eine Heizungs- und Klimaanlage für ein Kraftfahrzeug mit einem Klimatisierungsgehäuse bekannt, wobei das Gehäuse einen mit wenigstens einer Luftaustrittsöffnung versehenen Anschlussabschnitt für die Verbindung mit einer wahlweise ansetzbaren Fondtemperiereinheit aufweist. Das Klimatisierungsgehäuse ist dabei außenseitig entweder mit einer Fondtemperiereinheit ausgestattet oder an dieser Öffnung im Klimatisierungsgehäuse mit einem Deckelteil dicht verschließbar, falls eine Klimatisierung des Fondraums nicht erforderlich ist.

Der Erfindung liegt damit die Aufgabe zugrunde, eine Bauanordnung für eine Klimaanlage zu schaffen, die in den unterschiedlichsten Fahrzeugtypen verwendet werden kann, ohne dass dazu die Ausgestaltung der Anlage unter hohem baulichem bzw. kostenintensivem Aufwand verändert werden muss.

Dies wird erfindungsgemäß durch den Gegenstand des Anspruchs 1 erreicht. Vorteilhafte Ausführungsformen sind Gegenstand der Unteransprüche.

Die Erfindung betrifft eine Bauanordnung für eine Klimaanlage, insbesondere für ein Kraftfahrzeug, mit wenigstens einem Gehäuse, wenigstens einer ersten Vorrichtung zum Austausch von Wärme, wenigstens einer zweiten Vorrichtung zum Austausch von Wärme, wenigstens einem Einlass für ein insbesondere gasförmiges Medium, wenigstens einem Auslass für das insbesondere gasförmiges Medium und wenigstens einer Strömungsregeleinrichtung. Dabei weist das Gehäuse wenigstens einen Aufnahmeeinrichtung für wenigstens eine weitere modulare Einrichtung auf.

Bei dem insbesondere gasförmigen Medium handelt es sich insbesondere um die zu erwärmende bzw. abzukühlende Luft, die schließlich in den Fahrzeuginnenraum geleitet werden soll.

Unter einer Strömungsregeleinrichtung wird eine Einrichtung verstanden, welche die Menge der Strömung und/oder deren Strömungsrichtung regelt und/oder steuert. So werden beispielsweise Luftklappen als Strömungsregeleinrichtungen im Sinne der Erfindung verstanden.

Unter einer Aufnahmeeinrichtung wird ein Bereich des Gehäuses verstanden, in dem die modulare Einrichtung angeordnet wird. Dieser Bereich kann räumlich durch Wände begrenzt sein, die an eine spezifische Form der modularen Einrichtung angepasst sind. Ferner kann die Aufnahmeeinrichtung Befestigungseinrichtungen zum Fixieren der modularen Einrichtung aufweisen.

Die Aufnahmeeinrichtung ist so ausgestaltet, dass die vollständige modulare Einrichtung in ihr bzw. in dem Gehäuse untergebracht ist.

In einer bevorzugten Ausführungsform der Erfindung wird die Aufnahmeeinrichtung im wesentlichen dadurch gebildet, dass ein vorgegebener Teil der Außenfläche des Gehäuses ausgespart wird:

Unter einer modularen Einrichtung wird entweder ein einzelnes Bauteil verstanden oder auch mehrere, zu einer Einheit zusammengefasste, Bauteile, die wenigstens einem gemeinsamen Zweck dienen.

In einer bevorzugten Ausführungsform weist die wenigstens eine weitere modulare Einrichtung wenigstens eine das Medium beeinflussende Einrichtung auf.

Bei der das Medium beeinflussenden Einrichtung handelt es sich bevorzugt um eine Einrichtung aus einer Gruppe, welche Vorrichtungen zum Austausch von Wärme und/oder Strömungsregeleinrichtungen und/oder Strömungsführungseinrichtungen und/oder Auslässe aufweist.

Unter einer Strömungsführungseinrichtung wird eine Einrichtung verstanden, welche eine Strömung, insbesondere eine Luftströmung, wenigstens abschnittsweise auf einen vorgegebenen Pfad führt, wie beispielsweise ein Luftkanal oder dergleichen.

Die modulare Einrichtung wird verwendet, um die Klimaanlage an unterschiedliche Bedürfnisse anzupassen bzw. um eine unterschiedliche Anzahl von Zonen innerhalb eines Fahrzeugs klimatisieren zu können. So sind insbesondere 2-, 2 ½-, 3- oder 4-zonige Regelungen denkbar. Unter einer 2-zonigen Regelung wird im Rahmen der vorliegenden Erfindung verstanden, dass ein ausgewählter Bereich des Fahrzeuginnenraums, beispielsweise der Frontraum, separat für die Fahrer- und Beifahrerseite klimatisiert werden kann.

Unter einer 2 ½-zonigen Regelung wird verstanden, dass neben dem genannten Frontbereich noch ein weiterer Bereich, wie beispielsweise der Fondbereich, teilweise geregelt werden, insbesondere gekühlt werden kann.

Im Falle einer 3-zonigen Regelung kann neben dem Frontbereich auch der Fondbereich vollständig geregelt bzw. klimatisiert werden.

Unter einer 4-zonigen Regelung wird verstanden, dass neben dem Frontbereich auch der Fondbereich separat für die linke und rechte Seite geregelt bzw. klimatisiert werden kann.

In einer weiteren bevorzugten Ausführungsform ist die erste Vorrichtung zum Austausch von Wärme ein Verdampfer. Dabei ist dieser Verdampfer ein Bestandteil eines Kältekreislaufs.

In einer weiteren bevorzugten Ausführungsform ist die zweite Vorrichtung zum Austausch von Wärme eine Heizvorrichtung. Dabei kann diese Heizvorrichtung die durch sie hindurchströmende Luft entweder luftseitig oder wasserseitig erwärmen. Dabei wird unter luftseitig verstanden, dass die Erwärmung der Luft im wesentlichen über die Menge der Luft gesteuert wird, welche durch die Heizeinrichtung tritt. Die Menge des Kältemittels, welches durch die Heizeinrichtung fließt, bleibt dabei im wesentlichen konstant.

Unter einer wasserseitigen Erwärmung wird verstanden, dass die Temperatur bzw. die Aufwärmung der Luft im wesentlichen durch die Menge und/oder die Temperatur des durch die Heizvorrichtung geleiteten Kältemittels geregelt und/oder gesteuert wird.

In einer weiteren bevorzugten Ausführungsform ist wenigstens eine dritte Vorrichtung zum Austausch von Wärme vorgesehen, wobei die dritte Vorrichtung zum Austausch von Wärme aus einer Gruppe von Vorrichtungen ausgewählt ist, in welche elektrische Heizelemente, kraftstoffbetriebene Heizelemente, CO₂-Wärmepumpen, Abgaswärme nutzende Heizungen, Verdampfer, Kondensatoren, Standheizungen, elektrische Heizungen, PTC-Heizungen, Wärmetauscher und dergleichen enthält.

In einer weiteren bevorzugten Ausführungsform ist im Auslass wenigstens eine Strömungsregeleinrichtung vorgesehen. Damit kann die Menge der in den Fahrzeuginnenraum geleiteten Luft gesteuert und/oder geregelt werden.

In einer weiteren bevorzugten Ausführungsform ist in Strömungsrichtung der Luft vor der zweiten Vorrichtung zum Austausch von Wärme wenigstens eine Strömungsregeleinrichtung angeordnet. Bevorzugt ist eine Vielzahl von Strömungsregeleinrichtungen in Strömungsrichtung der Luft vor der zweiten Vorrichtung zum Austausch von Wärme angeordnet. Unter der Strömungsrichtung der Luft wird dabei die Richtung verstanden, in welcher sich die Luft wenigstens abschnittsweise in einem vorgegebenen Abschnitt ausbreitet. Dabei bleiben kleinere Richtungsänderungen, beispielsweise infolge von Turbulenzen, unberücksichtigt.

In einer weiteren bevorzugten Ausführungsform sind die zweite und die dritte Vorrichtung zum Austausch von Wärme zueinander benachbart angeordnet. Bevorzugt sind die zweite und die dritte Vorrichtung zum Austausch von Wärme zueinander parallel angeordnet. Unter parallel angeordnet wird dabei verstanden, dass zwei durch die zweite und dritte Vorrichtung verlaufende Ebenen, welche durch die beiden Hauptausdehnungsrichtungen der Vorrichtung aufgespannt werden, zueinander parallel sind. Dabei stehen die zweite und die dritte Vorrichtung zum Austausch von Wärme bevorzugt miteinander in Berührungskontakt.

In einer weiteren bevorzugten Ausführungsform weist das Gehäuse wenigstens eine Strömungsführung auf, durch welche das gasförmige Medium, das heißt die Luft, wenigstens teilweise an der zweiten Vorrichtung zum Austausch von Wärme vorbeigeleitet wird. Auf diese Weise kann ein Durchgang der Luft durch die Heizeinrichtung vermieden werden, falls bloß eine Kühlung der Luft gewünscht ist.

In einer weiteren bevorzugten Ausführungsform weist wenigstens eine Vorrichtung zum Austausch von Wärme, bevorzugt die Heizeinrichtung, zwei wenigstens abschnittsweise voneinander getrennte Strömungswege für ein Kältemittel auf.

Zu diesem Zweck weist wenigstens eine Vorrichtung zum Austausch von Wärme wenigstens zwei Zuführungen für das Kältemittel auf. Dies bedeutet, dass in einem vorgegebenen Bereich der Vorrichtung zum Austausch von Wärme das Kältemittel in zwei voneinander getrennten Wegen geführt wird.

Bevorzugt wird das Kältemittel aus den wenigstens zwei abschnittsweise voneinander getrennten Strömungswegen über eine gemeinsame Ableitung abgeführt.

In einer weiteren bevorzugten Ausführungsform ist in wenigstens einer Zuführung und/oder Ableitung für das Kältemittel innerhalb der Vorrichtung zum Austausch von Wärme eine Regel- und/oder Steuereinrichtung vorgesehen, welche den Durchfluss des Kältemittels durch die Vorrichtung zum Austausch von Wärme steuert und/oder regelt.

In einer weiteren bevorzugten Ausführungsform sind die wenigstens zwei Strömungswege für das Kältemittel innerhalb der Vorrichtung zum Austausch von Wärme in unterschiedlichen räumlichen Abschnitten der Vorrichtung zum Austausch von Wärme angeordnet. Dies bedeutet, dass die einzelnen Strömungswege nicht alternierend abschnittsweise angeordnet sind, sondern beispielsweise auf einem vorbestimmten Abschnitt der Vorrichtung zum Austausch von Wärme vollständig der eine Strömungsweg und in einem weiteren Abschnitt der Vorrichtung zum Austausch von Wärme der andere bzw. weitere Strömungsweg. Daneben können auch mehr als zwei Strömungswege, wie beispielsweise drei Strömungswege, vorgesehen sein, die in voneinander getrennten Abschnitten der Vorrichtung zum Austausch von Wärme geführt werden.

Die Erfindung ist ferner auf eine Klimaanlage, insbesondere für ein Kraftfahrzeug, gerichtet, welche eine Bauanordnung der oben beschriebenen Art aufweist.

Weitere Vorteile und Ausführungsformen der vorliegenden Erfindung ergeben sich aus den beigefügten Zeichnungen.

Darin zeigen:
- Fig. 1: die schematische Darstellung einer erfindungsgemäßen Bauanordnung;
- Fig. 2: eine perspektivische Darstellung einer erfindungsgemäßen Bauanordnung;
- Fig. 3: eine perspektivische Darstellung einer erfindungsgemäßen Bauanordnung in einer weiteren Ausführungsform;
- Fig. 4: eine perspektivische Darstellung einer erfindungsgemäßen Bauanordnung in einer weiteren Ausführungsform;
- Fig. 5: eine Heizvorrichtung für eine erfindungsgemäße Bauanordnung in perspektivischer Darstellung;
- Fig. 6: die Heizvorrichtung aus Fig. 7 in einer weiteren perspektivischen Darstellung.
- Fig. 7: eine schematische Darstellung einer erfindungsgemäßen Bauanordnung in einer bevorzugten Ausführungsform;
- Fig. 8: eine schematische Darstellung einer erfindungsgemäßen Bauanordnung in einer weiteren Ausführungsform;

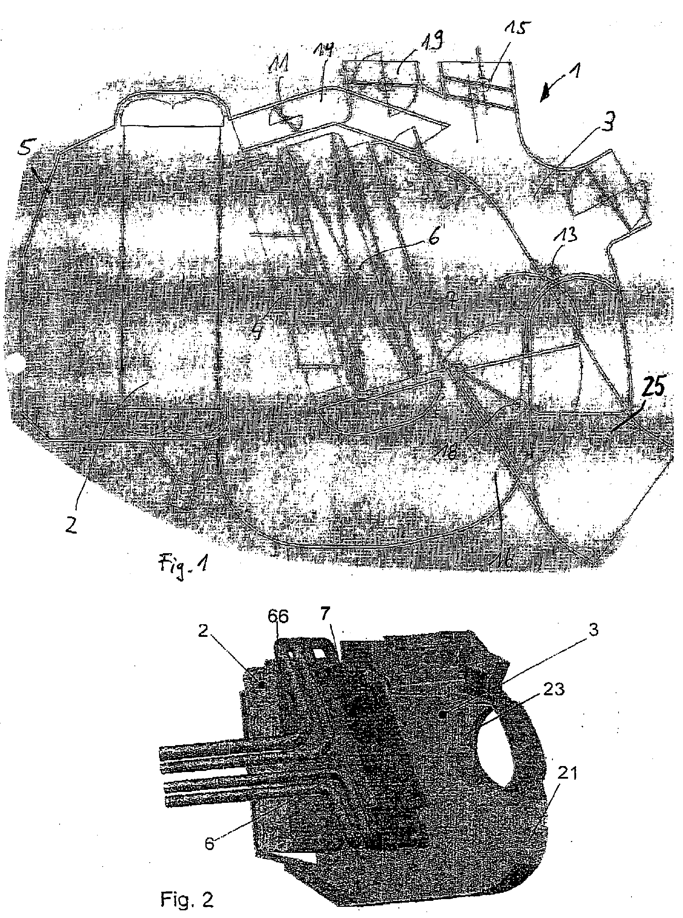

Fig. 1 zeigt eine schematische Darstellung einer erfindungsgemäßen Bauanordnung 1 für eine Klimaanlage, insbesondere für ein Kraftfahrzeug.

Das Bezugszeichen 2 kennzeichnet einen Verdampfer, der in Strömungsrichtung der Luft nach dem Lufteintritt 5 angeordnet ist. Der Verdampfer weist eine Breite zwischen 100 mm und 400 mm, bevorzugt zwischen 200 mm und 300 mm und besonders bevorzugt zwischen 230 mm und 290 mm auf. Die Höhe des Verdampfers liegt zwischen 100 mm und 400 mm, bevorzugt zwischen 180 mm und 280 mm und besonders bevorzugt zwischen 210 mm und 270 mm.

Die Tiefe des Verdampfers liegt zwischen 20 mm und 150 mm, bevorzugt zwischen 30 mm und 100 mm und besonders bevorzugt zwischen 50 mm und 80 mm.

Der Verdampfer weist eine Netzfläche auf, die zwischen 2 dm² und 10 dm² und bevorzugt zwischen 3 dm² und 8 dm² und besonders bevorzugt zwischen 4,5 dm² und 6 dm² liegt.

In Strömungsrichtung vor dem Verdampfer ist ein (nicht gezeigter) Filter angeordnet.

Dieser Filter weist eine Breite zwischen 104 mm, bevorzugt zwischen 200 mm und 300 mm und besonders bevorzugt zwischen 220 mm und 270 mm auf. Die Höhe des Filters liegt zwischen 100 mm und 400 mm, bevorzugt zwischen 200 mm und 300 mm und besonders bevorzugt zwischen 220 mm und 260 mm.

Die Tiefe des Filters liegt zwischen 10 mm und 90 mm, bevorzugt zwischen 20 mm und 70 mm und besonders bevorzugt zwischen 30 mm und 40 mm. Die Netzfläche des Filters liegt zwischen 2 dm² und 10 dm², bevorzugt zwischen 4 dm² und 8 dm² und besonders bevorzugt im Bereich von 6 dm².

Bezugszeichen 4 bezieht sich auf eine Vielzahl von Strömungsregeleinrichtungen, die in Strömungsrichtung der Luft vor der Heizeinrichtung 6 und nach dem Verdampfer 2 angeordnet sind. Dabei sind bevorzugt eine Vielzahl von einzelnen Regeleinrichtungen vorgesehen, die insbesondere, aber nicht ausschließlich, von Motoren gesteuert und/oder geregelt werden können, um auf diese Weise eine Luftzufuhr an die Heizeinrichtung 6 zu steuern und/oder zu regeln. Die zweite Vorrichtung zum Austausch von Wärme 6 ist in dieser Figur eine Heizeinrichtung. Die Vorrichtung zum Austausch von Wärme 6 weist eine Breite zwischen 100 und 400 mm, bevorzugt zwischen 120 und 350 mm und besonders bevorzugt zwischen 250 und 320 mm auf.

Die Höhe der Vorrichtung 6 liegt zwischen 100 und 400 mm, bevorzugt zwischen 180 und 280 mm und besonders bevorzugt zwischen 210 und 260 mm.

Die Tiefe der Vorrichtung 6 zum Austausch von Wärme 6 liegt zwischen 10 und 70 mm, bevorzugt zwischen 20 und 60 mm und besonders bevorzugt zwischen 25 und 40 mm. Die Netzfläche der Vorrichtung 6 zum Austausch von Wärme liegt zwischen 2 und 8 dm², bevorzugt zwischen 3 und 7 dm² und besonders bevorzugt zwischen 4,5 und 5 dm².

Unmittelbar im Anschluss an die Vorrichtung zum Austausch von Wärme 6 schließt sich eine dritte Vorrichtung zum Austausch von Wärme 7 an, bei der es sich in dieser Ausführungsform um ein PTC-Heizelement handelt. Dieses PTC-Element weist eine Breite zwischen 100 mm und 400 mm, bevorzugt zwischen 120 mm und 250 mm und besonders bevorzugt zwischen 140 mm und 180 mm auf.

Die Höhe dieser dritten Vorrichtung 7 zum Austausch von Wärme liegt zwischen 100 mm und 300 mm, bevorzugt zwischen 150 mm und 260 mm und besonders bevorzugt zwischen 180 und 230 mm. Die Tiefe dieser dritten Vorrichtung zum Austausch von Wärme 7 liegt zwischen 5 und 30 mm, bevorzugt zwischen 10 und 20 mm und besonders im Bereich von 15 mm.

Bezugszeichen 14 kennzeichnet einen Luftströmungskanal mit einer in diesem Luftströmungskanal angeordneten Strömungsregeleinrichtung 11. Das Bezugszeichen 19 kennzeichnet einen Auslass für die Luft und das Bezugszeichen 15 eine in einem weiteren Auslass angeordnete Strömungsregeleinrichtung. Die einzelnen Auslässe 19 können in unterschiedliche Bereiche des Kraftfahrzeuginnenraums führen, wie beispielsweise den vorderen oder den hinteren Fußraum, an die Frontscheibe oder an im Armaturenbrett vorgesehene Lüftungskanäle.

Das Bezugszeichen 3 kennzeichnet das Gehäuse, in dem die einzelnen Vorrichtungen zum Austausch von Wärme sowie die Regeleinrichtungen untergebracht sind. Das Bezugszeichen 16 bezieht sich auf einen Strömungskanal für die Luft, der unter der Vorrichtung 6 zum Austausch von Wärme angeordnet ist.

Wenn die Strömungsregeleinrichtungen 4 einen Durchgang der Luft durch die Heizeinrichtung 6 verhindern, wird wenigstens ein Anteil der Luft durch diesen Strömungsweg 16 fließen. Mittels einer Strömungsregeleinrichtung, das heißt einer Luftklappe 18, kann die Strömung der Luft durch den Strömungskanal 16 gesteuert und/oder geregelt werden. Die Fläche dieses Strömungsweges 16 liegt zwischen 0,5 dm² und 4 dm², bevorzugt zwischen 1 dm² und 2 dm² und besonders bevorzugt im Bereich von 1,5 dm².

Das Bezugszeichen 25 kennzeichnet eine weitere erfindungsgemäße Einrichtung, welche in dem Gehäuse 3 untergebracht ist. In diesem Fall handelt es sich um ein Zweizonenmodul, um zwei voneinander getrennte Zonen des Fahrzeuginnenraums mit klimatisierter Luft zu versorgen. Das Bezugszeichen 13 kennzeichnet eine Strömungsregeleinrichtung, welche den Strömungsfluss in das Zweizonenmodul 25 regelt und/oder steuert.

In Fig. 2 ist eine perspektivische Ansicht einer erfindungsgemäßen Bauanordnung gezeigt. Dabei bezieht sich das Bezugszeichen 6 wieder auf die Vorrichtung zum Austausch von Wärme und das Bezugszeichen 7 auf die dritte Vorrichtung zum Austausch von Wärme, bei welcher es sich beispielsweise um ein PTC-Heizelement handeln kann. Das Bezugszeichen 3 kennzeichnet das Gehäuse, wobei in dem Bereich bzw. der Aufnahmeeinrichtung 21 modulare Einrichtungen angeordnet werden können. Das Bezugszeichen 66 bezieht sich auf eine Zuführung bzw. Ableitung für ein durch die Vorrichtung zum Austausch von Wärme 6 fließendes Kältemittel. Das Bezugszeichen 2 kennzeichnet einen Verdampfer.

In dem Bereich 23 des Gehäuses 3 kann beispielsweise eine Strömungsregeleinrichtung eingesetzt werden.

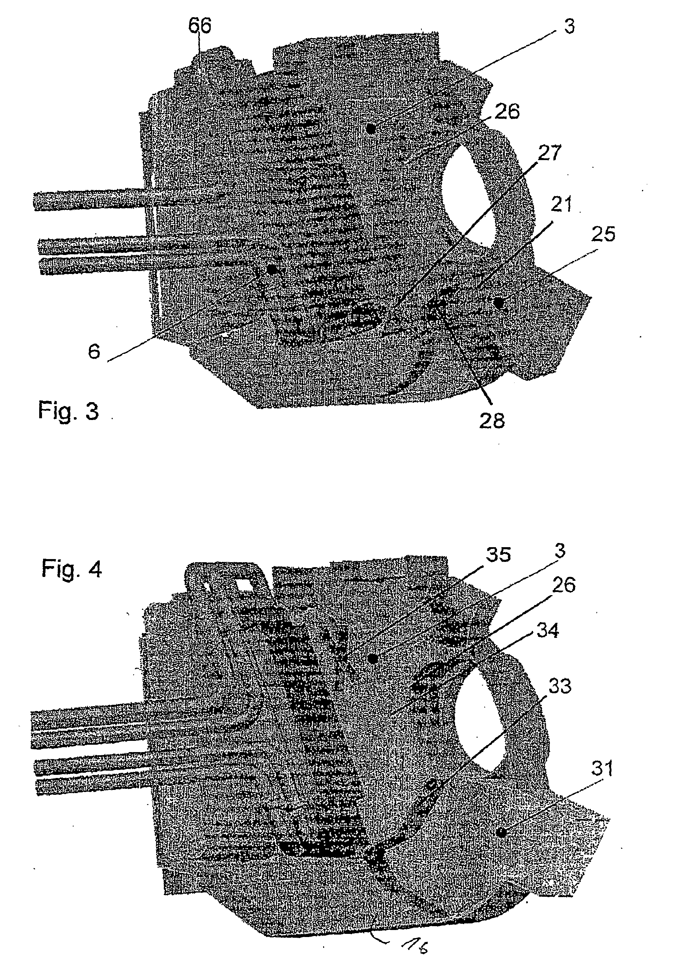

In Fig. 3 ist eine weitere perspektivische Darstellung einer erfindungsgemäßen Bauanordnung gezeigt. Im Gegensatz zu der in Fig. 2 gezeigten Anordnung wurde nunmehr in den Bereich bzw. die Aufnahmeeinrichtung 21 eine modulare Einrichtung 25 eingefügt. Daneben ist nunmehr eine Strömungsregeleinrichtung 26 vorhanden.

Das Bezugszeichen 27 bezieht sich auf eine Strömungsregeleinrichtung, mittels derer die an der Vorrichtung zum Austausch von Wärme 6 vorbeigeleitete Luft gesteuert und/oder geregelt werden kann. Mittels einer weiteren Strömungsregeleinrichtung 28 kann die durch die modulare Einrichtung 25 eintretende Luft bzw. deren Menge geregelt und/oder gesteuert werden.

Fig. 4 zeigt eine weitere Ausführungsform der erfindungsgemäßen Bauanordnung in einer perspektivischen Darstellung. Die Strömungsregeleinrichtung 33 dient dazu, die Anteile der Luft, die durch den Kanal 16 gelangten, und die Anteile, die durch die Vorrichtung 6 zum Austausch von Wärme gelangt, zu regeln und/oder zu steuern und an die modulare Einrichtung 31 zu leiten.

Die modulare Einrichtung 31 dient dazu, zwei Fondzonen zu klimatisieren, wobei sich insgesamt eine 4-Zonen-Klimatisierung ergibt.

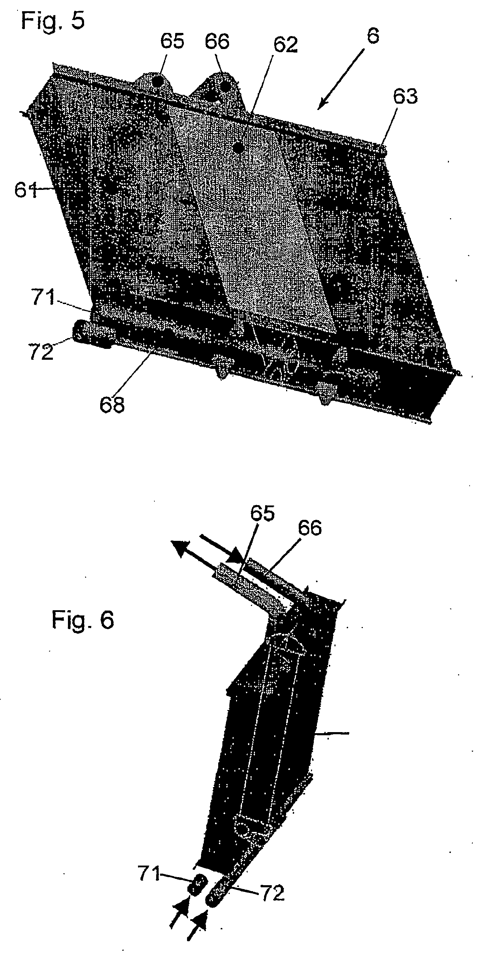

Fig. 5 zeigt eine zweite Vorrichtung zum Austausch von Wärme für eine erfindungsgemäße Bauanordnung. Diese Vorrichtung weist drei Strömungsabschnitte 61, 62 und 63 auf. Innerhalb jedem dieser Abschnitte wird jeweils ein Kältemittel geführt, wobei die einzelnen Strömungen wenigstens abschnittsweise voneinander getrennt sind. Bei diesem Kältemittel kann es sich beispielsweise um Wasser aus dem Kühlkreislauf eines Kraftfahrzeugs handeln.

Um die getrennte Führung des Kältemittels innerhalb der Vorrichtung 6 zu erreichen, sind drei Zuführungen 66, 71 und 72 vorgesehen, die das Kältemittel jeweils in die entsprechenden Bereiche 62, 61 und 63 leiten.

Diese Zuführungen 66, 71 und 72 können beliebige geometrische Querschnitte aufweisen, wie beispielsweise rechteckförmige, polygonförmige, kreis- oder ellipsenförmige und Mischformen hieraus. In der vorliegenden Ausführungsform liegt der Rohrdurchmesser zwischen 5 mm und 20 mm, bevorzugt zwischen 10 mm und 20 mm und besonders bevorzugt im Bereich von 15 mm. In der vorliegenden Ausführungsform werden die Abschnitte 61 und 63 wasserseitig geregelt und der Bereich 62 luftseitig geregelt. Zu diesem Zweck weisen Zuführungen 71 und 72 (nicht gezeigte) Regeleinrichtungen auf, welche die Menge des durch die Abschnitte 61 und 63 fließenden Kältemittels steuern und/oder regeln. Im Abschnitt 62 hingegen wird die Menge des durch diesen Abschnitt fließenden Kältemittels im wesentlichen nicht geregelt, sondern die Temperaturregelung findet über die Menge der durch diesen Abschnitt strömenden Luft statt. Über die Ableitung 65 wird das Kältemittel aus allen Abschnitten 61, 62 und 63 gemeinsam aus der Vorrichtung 6 abgeführt. Die Ableitung 65 weist einen Rohrdurchmesser zwischen 8 und 30 mm, bevorzugt zwischen 12 und 24 mm und besonders bevorzugt im Bereich von 18 mm auf.

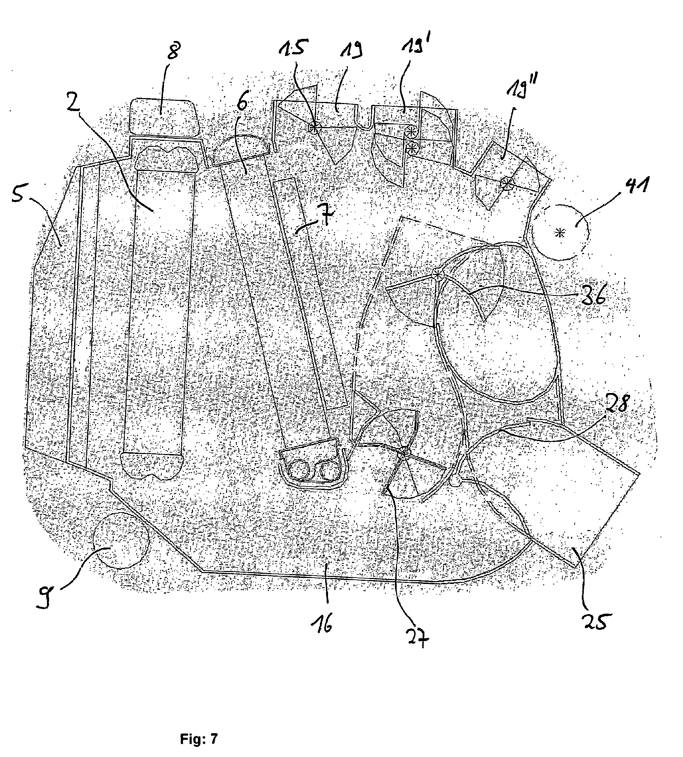

Fig. 6 zeigt die Vorrichtung zum Austausch von Wärme 6 aus Fig. 7 in einer weiteren perspektivischen Darstellung. Neben der hier gezeigten Anordnung der Zuführungen und Ableitungen können auch andere Anordnungen vorgesehen sein. So könnte auch die Ableitung parallel zu der Vorrichtung verlaufen oder auch mehrere gekrümmte Abschnitte aufweisen.

Das Bezugszeichen 69 bezieht sich auf eine Durchflusseinrichtung, durch welche das Kältemittel auf seinem Strömungsweg zwischen der Zuleitung 66 und der Ableitung 65 fließt. In dem mittleren Abschnitt fließt das Kältemittel zunächst in einen Teilbereich der Durchflusseinrichtung 69 nach unten und dann in einem zweiten Teilbereich wieder nach oben zu der Abteilung 65.

Die Gestaltung ist jedoch nicht zwingend; so könnten auch in den Bereichen 61 und 73 die Durchflusseinrichtungen so gestaltet sein, dass das Kältemittel die Vorrichtung zuerst in einer ersten, und dann in einer dieser ersten Richtung entgegengesetzten Richtung durchströmt.

Auch in den Abschnitten 61 und 63 sind (nicht gezeigte) Durchflusseinrichtungen vorgesehen. Im Unterschied zu der Durchflusseinrichtung 69 fließt hier jedoch das Kältemittel im wesentlichen nur in eine Richtung, das heißt, ausgehend von den Zuführungen 71 bzw. 72 in Richtung der Ableitung 65.

In Fig. 7 ist schematisch eine erfindungsgemäße Bauanordnung entsprechend der perspektivischen Darstellung in Fig. 3 gezeigt. In dem mit 5 gekennzeichneten Bereich tritt Luft in die erfindungsgemäße Anordnung ein. In den mit 8 gekennzeichneten Bereich können insbesondere, aber nicht ausschließlich, Kabel, beispielsweise für die Cockpit-Verkabelung, geführt werden. Es ist jedoch auch möglich, Kabelstränge in den mit 9 gekennzeichneten Bereich zu führen.

Das Bezugszeichen 6 zeigt die zweite Vorrichtung zum Austausch von Wärme. In dem in Fig. 7 gezeigten Schnitt ist der Abschnitt 62 der Vorrichtung 6 zu sehen, das heißt, der luftseitig geregelte Abschnitt. Die jeweils wasserseitig geregelten Abschnitte 61, 63 befinden sich, ausgehend von den Figuren, oberhalb bzw. unterhalb der Zeichnungsebene.

Das Bezugszeichen 27 kennzeichnet eine Strömungsregeleinrichtung, welche die Luftzufuhr aus dem Bereich 16 regelt. Die Strömungsregeleinrichtung 28 regelt die Luftzufuhr in die modulare Einrichtung 25. Die Strömungsregeleinrichtung 36 regelt die Luftzufuhr in ausgewählte Bereiche des Fahrzeuginnenraums, wie hier beispielsweise den Fußraum vorne und im Fond. Das Bezugszeichen 15 kennzeichnet eine weitere Strömungsregeleinrichtung und das Bezugszeichen 19 einen weiteren Auslass für die Luft.

Bei dieser Ausführungsform dient der Auslass 19 zum Entfrosten der Windschutzscheibe; der Auslass 19' bzw. die Auslässe 19' führen zu links und rechts am Armaturenbrett angeordneten Düsen, und der Auslass 19" zu einer bevorzugt am Armaturenbrett in der Mitte angeordneten Mitteldüse.

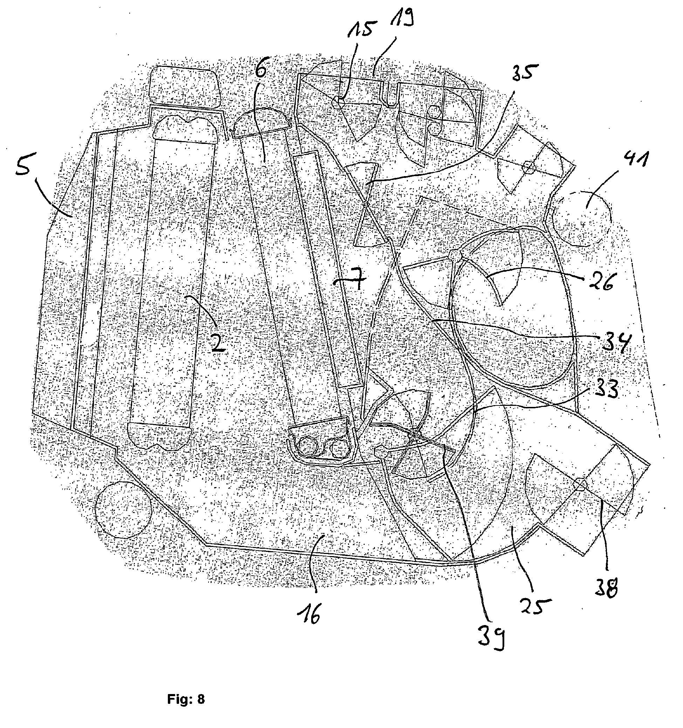

Fig. 8 zeigt schematisch eine erfindungsgemäße Bauanordnung, welche teilweise der in Fig. 4 gezeigten perspektivischen Anordnung entspricht.

Bezugszeichen 5 kennzeichnet den Lufteintritt in die erfindungsgemäße Bauanordnung, das Bezugszeichen 2 den Verdampfer. In den Bereichen 8 oder 9 können Kabelstränge für das Kraftfahrzeug-Cockpit geführt werden.

Das Bezugszeichen 19 ist ein Auslass, in dem eine Strömungsregeleinrichtung 15 angeordnet ist. Das Bezugszeichen 7 kennzeichnet eine dritte Vorrichtung zum Austausch von Wärme, wie insbesondere, aber nicht ausschließlich, ein PTC-Heizelement.

Über die Strömungsregeleinrichtung 35 kann der Luftstrom in einzelne Auslässe, wie beispielsweise in einen Defrost-Kanal, gesteuert oder geregelt werden. Auch in Fig. 8 ist der mittlere Abschnitt 62 der Vorrichtung 6 zum Austausch von Wärme gezeigt.

Im Bereich 41 kann beispielsweise ein Träger für die erfindungsgemäße Anordnung angeordnet sein. Das Bezugszeichen 26 bezieht sich auf eine Strömungsregeleinrichtung, welche den Luftstrom, der in den Fußraum eines Kraftfahrzeuges gelangt, regelt und/oder steuert. Das Bezugszeichen 34 kennzeichnet einen Strömungskanal für die Luft, der sich an die Vorrichtung 6 zum Austausch von Wärme bzw. deren Abschnitt 62 anschließt. Aus dieser Darstellung geht deutlich hervor, dass die Luft, die von der Vorrichtung 6 zum Austausch von Wärme in die modulare Einrichtung 25 gelangt, im wesentlichen aus dem Abschnitt 62 der Vorrichtung 6 zum Austausch von Wärme stammt. Da die modulare Einrichtung 25 zur Klimatisierung des Fondbereichs des Fahrzeugs dient, ergibt sich, dass in dieser Ausführungsform der Fondbereich im wesentlichen durch den luftseitigen Abschnitt 62 der Vorrichtung 6 zum Austausch von Wärme klimatisiert wird.

Das Bezugszeichen 33 bezieht sich auf eine weitere Regeleinrichtung für die Luft. Mittels dieser Strömungsregeleinrichtung und/oder der Strömungsregeleinrichtung 39 kann die aus dem Kanal 16 stammende Luft geregelt und/oder gesteuert werden. Die Strömungsregeleinrichtung 38 ist in dieser Ausführungsform nicht in der gleichen Ebene angeordnet wie beispielsweise die Strömungsregeleinrichtung 39, sondern dahinter.

## Patentansprüche

1. Bauanordnung für eine Klimaanlage für ein Kraftfahrzeug, mit wenigstens einem Gehäuse (3), wenigstens einer ersten Vorrichtung (2) zum Austausch von Wärme, wenigstens einer zweiten Vorrichtung (6) zum Austausch von Wärme, wenigstens einem Einlass (5) für ein insbesondere gasförmiges Medium, wenigstens einem Auslass (19) für das insbesondere gasförmige Medium und wenigstens einer Strömungsregeleinrichtung (15), wobei das Gehäuse wenigstens eine Aufnahmeeinrichtung (21) für wenigstens eine weitere, modulare Einrichtung (25, 31), ausgebildet als Strömungsregelungs- oder Strömungsführungseinrichtung, aufweist **dadurch gekennzeichnet, dass** die Aufnahmeeinrichtung (21) so ausgestaltet ist, dass die vollständige modulare Einrichtung (25, 31) in dem Gehäuse (3) untergebracht ist und mittels der modularen Einrichtung eine Anpassung an eine unterschiedliche Anzahl von zu klimatisierenden Zonen in Abhängigkeit der zu klimatisierenden Zonen erfolgt.

2. Bauanordnung nach Anspruch 1, **dadurch gekennzeichnet, dass** die wenigstens eine weitere modulare Einrichtung (25, 31) wenigstens eine das Medium beeinflussende Einrichtung aufweist.

3. Bauanordnung nach wenigstens einem der vorangegangenen Ansprüche, **dadurch gekennzeichnet, dass** die das Medium beeinflussende Einrichtung aus einer Gruppe von das Medium beeinflussenden Einrichtungen ausgewählt ist, welche Vorrichtungen zum Austausch von Wärme, und/oder Strömungsregeleinrichtungen, und/oder Strömungsführungseinrichtungen und/oder Auslässe aufweist.

4. Bauanordnung nach wenigstens einem der vorangegangenen Ansprüche, **dadurch gekennzeichnet, dass** die erste Vorrichtung (2) zum Austausch von Wärme ein Verdampfer ist.

5. Bauanordnung nach wenigstens einem der vorangegangenen Ansprüche, **dadurch gekennzeichnet, dass** die zweite Vorrichtung (6) zum Austausch von Wärme eine Heizvorrichtung ist.

6. Bauanordnung nach wenigstens einem der vorangegangenen Ansprüche, **dadurch gekennzeichnet, dass** wenigstens eine dritte Vorrichtung (7) zum Austausch von Wärme vorgesehen ist, wobei die dritte Vorrichtung zum Austausch von Wärme aus einer Gruppe von Vorrichtungen ausgewählt, ist, welche elektrische Heizelemente, kraftstoffbetriebene Heizelemente und der gleichen enthält.

7. Bauanordnung nach wenigstens einem der vorangegangenen Ansprüche, **dadurch gekennzeichnet, dass** in jedem Auslass (19) wenigstens eine Strömungsregeleinrichtung (15) vorgesehen ist.

8. Bauanordnung nach wenigstens einem der vorangegangenen Ansprüche, **dadurch gekennzeichnet, dass** in Strömungsrichtung der Luft vor der zweiten Vorrichtung (6) zum Austausch von Wärme wenigstens eine Strömungsregelungseinrichtung (15) angeordnet ist.

9. Bauanordnung nach wenigstens einem der vorangegangenen Ansprüche, **dadurch gekennzeichnet, dass** die zweite (6) und die dritte Vorrichtung (7) zum Austausch von Wärme zueinander benachbart angeordnet sind.

10. Bauanordnung nach wenigstens einem der vorangegangenen Ansprüche, **dadurch gekennzeichnet, dass** die zweite (6) und die dritte Vorrichtung (7) zum Austausch von Wärme zueinander parallel angeordnet sind.

11. Bauanordnung nach wenigstens einem der vorangegangenen Ansprüche, **dadurch gekennzeichnet, dass** das Gehäuse (3) wenigstens eine Strömungsführung aufweist, durch welche das gasförmige Medium wenigstens teilweise an wenigstens der zweiten Vorrichtung zum Austausch Wärme vorbeigeleitet wird.

12. Bauanordnung nach wenigstens einem der vorangegangenen Ansprüche, **dadurch gekennzeichnet, dass** wenigstens eine Vorrichtung zum Austausch von Wärme wenigstens zwei wenigstens abschnittsweise voneinander getrennte Strömungswege (61, 62, 63) für ein Kältemittel aufweist.

13. Bauanordnung nach wenigstens einem der vorangegangenen Ansprüche, **dadurch gekennzeichnet, dass** wenigstens eine Vorrichtung zum Austausch von Wärme wenigstens zwei Zuführungen (66, 71, 72) für ein Kältemittel aufweist.

14. Bauanordnung nach wenigstens einem der vorangegangenen Ansprüche, **dadurch gekennzeichnet, dass** das Kältemittel aus den wenigstens zwei wenigstens abschnittsweise voneinander getrennten Strömungswegen über eine gemeinsame Ableitung (65) abgeführt wird.

15. Bauanordnung nach wenigstens einem der vorangegangenen Ansprüche, **dadurch gekennzeichnet, dass** in wenigstens einer Zuführung oder Ableitung für das Kältemittel eine Regel und/oder Steuereinrichtung vorgesehen ist, welche den Durchfluss des Kältemittels durch die Vorrichtung zum Austausch von Wärme steuert und/oder regelt.

16. Bauanordnung nach wenigstens einem der vorangegangenen Ansprüche, **dadurch gekennzeichnet, dass** die wenigstens zwei Strömungswege für das Kältemittel innerhalb der Vorrichtung zum Austausch von Wärme in unterschiedlichen räumlichen Abschnitten der Vorrichtung zum Austausch von Wärme angeordnet sind.

17. Klimaanlage für ein Kraftfahrzeug, welche wenigstens eine Bauanordnung nach wenigstens einem der vorangegangenen Ansprüche aufweist.

## Claims

1. Assembly arrangement for an air conditioning unit for a motor vehicle having at least one housing (3), at least one first device (2) for the exchange of heat, at least one second device (6) for the exchange of heat, at least one inlet (5) for an in particular gaseous medium, at least one outlet (19) for the in particular gaseous medium and at least one flow control device (15), the housing having at least one receiving device (21) for at least one further modular device (25, 31), designed as a flow control or flow guidance device,
**characterised in that**
the receiving device (21) is designed such that the complete modular device (25, 31) is accommodated in the housing (3) and is adapted by means of the modular device to a different number of zones to be air conditioned dependent on the zones to be air conditioned.

2. Assembly arrangement in accordance with claim 1,
**characterised in that**
the at least one further modular device (25, 31) has at least one device which influences the medium.

3. Assembly arrangement in accordance with at least one of the preceding claims,
**characterised in that**
the device which influences the medium is selected from a group of devices which influence the medium and which comprise devices for the exchange of heat and/or flow control devices and/or flow guidance devices and/or outlets.

4. Assembly arrangement in accordance with at least one of the preceding claims,
**characterised in that**
the first device (2) for the exchange of heat is an evaporator.

5. Assembly arrangement in accordance with at least one of the preceding claims,
**characterised in that**
the second device (6) for the exchange of heat is a heating device.

6. Assembly arrangement in accordance with at least one of the preceding claims,
**characterised in that**
at least one third device (7) for the exchange of heat is provided, said third device for the exchange of heat being selected from a group of devices which includes electrical heating elements, fuel-operated heating elements and similar such devices.

7. Assembly arrangement in accordance with least one of the preceding claims,
**characterised in that**
at least one flow control device (15) is provided in each outlet (19).

8. Assembly arrangement in accordance with at least one of the preceding claims,
**characterised in that**
at least one flow control device (15) is positioned upstream of the second device (6) for the exchange of heat in the direction of air flow.

9. Assembly arrangement in accordance with at least one of the preceding claims,
**characterised in that**
the second device (6) and the third device (7) for the exchange of heat are positioned adjacent to one another.

10. Assembly arrangement in accordance with at least one of the preceding claims,
**characterised in that**
the second device (6) and the third device (7) for the exchange of heat are positioned parallel to one another.

11. Assembly arrangement in accordance with at least one of the preceding claims,
**characterised in that**
the housing (3) has at least one flow guide by which the gaseous medium is caused at least partially to bypass at least the second device for the exchange of heat.

12. Assembly arrangement in accordance with at least one of the preceding claims,
**characterised in that**
at least one device for the exchange of heat has at least two flow paths (61, 62 63) for a refrigerant, at least certain sections of which are separate from one another.

13. Assembly arrangement in accordance with at least one of the preceding claims,
**characterised in that**
at least one device for the exchange of heat has at least two feed lines (66, 71, 72) for a refrigerant.

14. Assembly arrangement in accordance with at least one of the preceding claims,
**characterised in that**
the refrigerant is discharged from the at least two flow paths, at least certain sections of which are separate from one another, via a common discharge line (65).

15. An assembly arrangement in accordance with at least one or the preceding claims,
**characterised in that**
a regulating and/or control device is provided in at least one feed line or discharge line for the refrigerant which regulates and/or controls the flow of refrigerant through the device for the exchange of heat.

16. An assembly arrangement in accordance with at least one of the preceding claims,
**characterised in that**
the at least two flow paths for the refrigerant are positioned within the device for the exchange of heat in different spatial sections of the device for the exchange of heat.

17. An air conditioning unit for a motor vehicle which has at least one assembly arrangement in accordance with at least one of the preceding claims.

## Revendications

1. Agencement structurel concernant un système de climatisation prévu pour un véhicule automobile, comprenant au moins un carter (3), au moins un premier dispositif (2) servant à l'échange de chaleur, au moins un deuxième dispositif (6) servant à l'échange de chaleur, au moins une entrée (5) pour un milieu, en particulier gazeux, au moins une sortie (19) pour le milieu, en particulier gazeux, et au moins un moyen de régulation d'écoulement (15), où le carter présente au moins un moyen de logement (21) prévu pour au moins un autre moyen modulaire (25, 31) configuré comme un moyen de régulation d'écoulement ou de guidage d'écoulement,
**caractérisé en ce que** le moyen de logement (21) est configuré de manière telle, que le moyen modulaire complet (25, 31) soit logé dans le carter (3) et que, à l'aide du moyen modulaire, soit réalisée, en fonction des zones à climatiser, une adaptation à un nombre variable de zones à climatiser.

2. Agencement structurel selon la revendication 1,
**caractérisé en ce que** l'autre moyen modulaire (25, 31) au moins au nombre de un présente au moins un moyen influençant le milieu.

3. Agencement structurel selon au moins l'une ou l'autre des revendications précédentes, **caractérisé en ce que** le moyen influençant le milieu est sélectionné parmi un groupe de moyens influençant le milieu, groupe qui présente des dispositifs servant à l'échange de chaleur et / ou des moyens de régulation d'écoulement et / ou des moyens de guidage d'écoulement et / ou des sorties.

4. Agencement structurel selon au moins l'une quelconque des revendications précédentes, **caractérisé en ce que** le premier dispositif (2) servant à l'échange de chaleur est un évaporateur.

5. Agencement structurel selon au moins l'une quelconque des revendications précédentes, **caractérisé en ce que** le deuxième dispositif (6) servant à l'échange de chaleur est un dispositif de chauffage.

6. Agencement structurel selon au moins l'une quelconque des revendications précédentes, **caractérisé en ce qu'**il est prévu au moins un troisième dispositif (7) servant à l'échange de chaleur, où le troisième dispositif servant à l'échange de chaleur est sélectionné parmi un groupe de dispositifs qui comprend des éléments chauffants électriques, des éléments chauffants fonctionnant avec un combustible et des éléments d'un type analogue.

7. Agencement structurel selon au moins l'une quelconque des revendications précédentes, **caractérisé en ce qu'**il est prévu, dans chaque sortie (19), au moins un moyen de régulation d'écoulement (15).

8. Agencement structurel selon au moins l'une quelconque des revendications précédentes, **caractérisé en ce qu'**au moins un moyen de régulation d'écoulement (15) est disposé, dans la direction d'écoulement de l'air, en amont du deuxième dispositif (6) servant à l'échange de chaleur.

9. Agencement structurel selon au moins l'une quelconque des revendications précédentes, **caractérisé en ce que** le deuxième dispositif (6) et le troisième dispositif (7), servant à l'échange de chaleur, sont disposés en étant voisins l'un de l'autre.

10. Agencement structurel selon au moins l'une quelconque des revendications précédentes, **caractérisé en ce que** le deuxième dispositif (6) et le troisième dispositif (7), servant à l'échange de chaleur, sont disposés en étant parallèles l'un à l'autre.

11. Agencement structurel selon au moins l'une quelconque des revendications précédentes, **caractérisé en ce que** le carter (3) présente au moins un guidage d'écoulement à travers lequel le milieu gazeux est dirigé en passant au moins partiellement devant au moins le deuxième dispositif servant à l'échange de chaleur.

12. Agencement structurel selon au moins l'une quelconque des revendications précédentes, **caractérisé en ce qu'**au moins un dispositif servant à l'échange de chaleur présente, pour un fluide frigorigène, au moins deux trajectoires d'écoulement (61, 62, 63) au moins séparées l'une de l'autre, par sections.

13. Agencement structurel selon au moins l'une quelconque des revendications précédentes, **caractérisé en ce qu'**au moins un dispositif servant à l'échange de chaleur présente au moins deux alimentations (66, 71, 72) pour un fluide frigorigène.

14. Agencement structurel selon au moins l'une quelconque des revendications précédentes, **caractérisé en ce que** le fluide frigorigène est évacué, par une conduite d'évacuation commune (65), des trajectoires d'écoulement au moins au nombre de deux, au moins séparées l'une de l'autre, par sections.

15. Agencement structurel selon au moins l'une quelconque des revendications précédentes, **caractérisé en ce qu'**il est prévu, dans au moins une alimentation ou dans une conduite d'évacuation, un moyen de régulation et / ou de commande pour le fluide frigorigène, lequel moyen commande et / ou régule le passage du fluide frigorigène à travers le dispositif servant à l'échange de chaleur.

16. Agencement structurel selon au moins l'une quelconque des revendications précédentes, **caractérisé en ce que** les trajectoires d'écoulement au moins au nombre de deux, prévues pour le fluide frigorigène, sont disposées, à l'intérieur du dispositif servant à l'échange de chaleur, dans différentes parties tridimensionnelles du dispositif servant à l'échange de chaleur.

17. Système de climatisation, prévu pour un véhicule automobile, qui présente au moins un agencement structurel selon au moins l'une quelconque des revendications précédentes.
